# FASCICULE DE BREVET EUROPEEN

(11) **EP 3 676 992 B1**
(45) Date de publication et mention de la délivrance du brevet: **09.10.2024**
(21) Numéro de dépôt: 18786836.9
(22) Date de dépôt: 24.08.2018
(51) Int. Cl.: H04L 41/50, H04L 41/0806, H04L 41/5041, H04W 16/04, H04W 48/18, H04L 43/20, H04L 41/0894

(54) **PROCÉDÉ DE TAXATION DE DONNÉES D'UNE APPLICATION ACHEMINÉES SUR UNE TRANCHE D'UN RÉSEAU DE COMMUNICATION**
VERFAHREN ZUR GEBÜHRENABRECHNUNG VON DATEN, DIE AUF EINEM ABSCHNITT EINES KOMMUNIKATIONSNETZWERKS GELEITET WERDEN
METHOD FOR FEE-CHARGING DATA OF AN APPLICATION ROUTED ON A SECTION OF A COMMUNICATION NETWORK

(30) Priorité: 28.08.2017 FR 1757926
(43) Date de publication de la demande: 08.07.2020
(73) Titulaire: Orange, 92130 Issy-les-Moulineaux (FR)
(72) Inventeur: BIHANNIC, Nicolas, 92326 Châtillon Cedex (FR); CORNILY, Jean-Michel, 92326 Châtillon Cedex (FR); FINKLER, Isabelle, 92326 Châtillon Cedex (FR)
(86) Numéro de dépôt international: PCT/FR2018/052100
(87) Numéro de publication internationale: WO 2019/043324

(56) Documents cités:
- WO-A1-2017/143047
- "3rd Generation Partnership Project; Technical Specification Group Services and System Aspects; Study on Architecture for Next Generation System (Release 14)", 3GPP STANDARD ; TECHNICAL REPORT ; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1 - 527, XP051295448

## Description

### 1. Domaine de l'invention

La demande d'invention se situe dans le domaine des infrastructures de télécommunications mobiles et des techniques relatives à la taxation des services mis en oeuvre à partir d'architectures de tranches de réseaux (en anglais *network slices*).

### 2. Etat de la technique antérieure

Les réseaux mobiles de nouvelle génération, ou réseaux de cinquième génération, vont supporter un nombre plus important de services et d'applications que les réseaux de générations précédentes (2G, 3G, 4G). Parmi les nouveaux services proposés sur les réseaux 5G, les services loT (en anglais *Internet Of Things*) ainsi que les services de mobilité basés sur des réseaux véhiculaires, c'est-à-dire les réseaux mis en oeuvre dans les moyens de transport (train, avion, voiture...), sont les plus emblématiques. Ces nouveaux services s'accompagnent de nouvelles chaînes de valeur dans lesquelles de nouveaux acteurs, parmi lesquels les constructeurs de voitures, les assurances, les équipementiers automobiles, interviennent et cherchent à obtenir une rétribution pour leur participation dans la fourniture des services aux clients.

Les spécifications des réseaux 5G vont en outre s'accompagner de modifications assez importantes des architectures de réseaux mobiles. Ainsi, jusqu'à la génération « 4G » de réseau mobile actuellement en cours de déploiement dans une majorité de pays, les différentes architectures de réseau reposent le plus souvent sur des équipements bien spécifiques et dédiés à certaines fonctionnalités précises, que ce soit au niveau du réseau d'accès ou du coeur de réseau, notamment en ce qui concerne la transmission de paquets depuis ou à destination d'un terminal mobile.

Les canaux de transmission établis entre un terminal mobile et un réseau mobile sont le plus souvent peu nombreux et sont utilisés pour acheminer de façon différenciée les paquets des services temps réel (voix, visio...) d'une part et les paquets de données « Internet » d'autre part. Cette mise en oeuvre offre notamment une flexibilité limitée quant aux possibilités de différencier les flux aujourd'hui acheminés sur le canal « Internet ». Ce manque de flexibilité et d'évolutivité inhérent à ce type d'architecture conventionnelle a amené à envisager l'adoption d'architectures plus flexibles pour la prochaine génération de réseaux mobiles afin de pouvoir répondre rapidement à des demandes extrêmement diverses en termes de trafic ou de qualité de service. Il est à noter que les réseaux 5G ont vocation à concerner aussi bien les réseaux mobiles que les réseaux fixes. Parmi les solutions envisagées, une des solutions les plus prometteuses repose sur une technique de découpage par tranches du réseau (« network slicing » en anglais), spécifiée notamment dans le rapport technique 3GPP TR 23.799 v2.0.0 de décembre 2016. Les tranches de réseau permettent en quelque sorte de spécialiser le réseau en fonction de besoins applicatifs, de contraintes de latence, de types de clients, de types de terminaux, de contraintes de sécurité, etc.

Il est prévu qu'une multitude de tranches de réseau puissent simultanément être établies au sein d'un même réseau de télécommunications, celles-ci permettant d'offrir des caractéristiques spécifiques pour les différents services à différentes clientèles sur un même réseau. La mise en oeuvre de tranches de réseau est favorisée par le développement en cours des architectures virtualisées offrant plus de flexibilité et de caractère dynamique en termes de déploiement. Les fonctions élémentaires d'acheminement et de traitement des données permettant de mettre en oeuvre une tranche de réseau requièrent des caractéristiques (modularité, adaptation capacitaire, passage à l'échelle) plus aisément déployées par des instances virtuelles.

Cette flexibilité offerte par les architectures basées sur des tranches de réseaux se confronte cependant à des contraintes en termes de comptage des flux et de taxation. En effet, le déploiement de nouveaux services notamment basés sur des réseaux véhiculaires, à partir d'architectures en tranches de réseaux, ne s'accompagne pas dans les techniques relevant de l'art antérieur de possibilités de pouvoir aisément associer un trafic à un prestataire particulier ou de pouvoir distinguer les différents flux pour les compter et les facturer de façon appropriée. Les solutions de taxation mises en oeuvre dans les techniques relevant de l'art antérieur requièrent le plus souvent de pouvoir identifier un trafic, soit dans le réseau d'accès ou le coeur de réseau, soit dans une plate-forme de service. Ces solutions sont coûteuses car elles nécessitent de devoir analyser tout le trafic, notamment le trafic transmis sur le canal « Internet ». Elles sont inopérantes si le trafic du prestataire est chiffré et elles offrent une flexibilité limitée, notamment en termes de différenciation des flux pour un partenaire donné notamment. En outre, le client n'est pas informé des conditions de taxation d'un service donné à un moment donné, ces conditions pouvant changer dans le temps, et il ne peut encore moins accepter ou refuser les conditions proposées. Le consortium NGTP (en anglais Next Génération Telematics Protocol), dans le document http://ngtp.org/wp-content/uploads/2013/12/NGTP20_nutshell.pdf (version 1.0, Novembre 2010), propose par exemple une plate-forme de service permettant d'aiguiller les trafics d'un terminal mobile vers les différents prestataires mais ne fait aucunement intervenir le client, ne serait-ce que pour l'informer.

Les problèmes relatifs à la taxation différenciée de flux dans une architecture de réseaux mobiles sont également rencontrés pour les services basés sur des données sponsorisées (en anglais « Sponsored Data ») permettant à un opérateur de facturer les services sponsorisés à un partenaire tiers, plutôt qu'au client comme c'est généralement le cas. Ces services requièrent également des solutions de type DPI (en anglais « Deep Packet Inspection ») pour pouvoir identifier ces flux afin de ne pas taxer le client, mais de telles solutions sont complexes en termes de configuration pour identifier les flux de services sponsorisés.

Le document WO 2017/143047 A1 décrit un procédé qui permet à un noeud de contrôle d'un réseau de sélectionner une tranche de réseau (network slice) à laquelle un équipement WRTU (Wireless Transmit/Receive Unit) doit se connecter, en fonction d'informations de service transmises par le WRTU et le cas échéant, un autre noeud de contrôle pour que le WRTU accède à la tranche de réseau.

Le document "3rd Génération Partnership Project; Technical Spécification Group Services and System Aspects; Study on Architecture for Next Génération System (Release 14)" est un document de spécification d'architecture de système décrivant notamment la mise en oeuvre de tranches de réseau dans un réseau de nouvelle génération. Le document décrit notamment l'attribution d'un identifiant de slice par un équipement de type NSSF lorsqu'un terminal n'en transmet pas dans un message d'attachement (D2, Page 86).

Plus globalement, cette problématique de taxation différenciée impacte les marchés dits verticaux regroupant les services dits de ville intelligente, d'agriculture intelligente ou d'industrie du futur faisant intervenir des acteurs différents et identifiés comme catalyseur des nouvelles architectures de réseaux.

La présente invention a pour objet de remédier à ces inconvénients.

### 3. Exposé de l'invention

L'invention vient améliorer la situation à l'aide d'un procédé de taxation des données d'une application transmises sur une tranche d'un réseau de communication, selon la revendication 1, mis en oeuvre dans un dispositif d'accès au réseau.

En fonction de critères relatifs à la qualité de service, à la sécurité, au terminal et/ou à l'application, les flux émis et reçus par un terminal pour une application sont véhiculés sur une tranche de réseau appropriée. Lorsqu'une nouvelle application est activée, c'est-à-dire qu'elle est mise en action ou démarrée, une tranche de réseau doit être déterminée par le dispositif d'accès auquel est attaché le terminal, en collaboration ou non avec un équipement du réseau, pour acheminer les données relatives à l'application. Dans les techniques relevant de l'art antérieur, la détermination de la tranche de réseau est réalisée en fonction par exemple de l'identifiant de l'application et l'association entre l'application et une tranche de réseau est réalisée par un ou plusieurs équipements du réseau uniquement. Sachant qu'un nombre grandissant d'applications est envisagé, que les applications peuvent être installées sur le dispositif d'accès mais aussi dans d'autres terminaux attachés au dispositif d'accès, le dispositif d'accès doit comprendre des moyens pour détecter qu'une nouvelle application est activée par lui-même ou par un terminal communiquant avec ses correspondants par l'intermédiaire du dispositif d'accès. Le dispositif d'accès doit connaître la tranche de réseau à utiliser pour les flux relatifs à l'application. Il sollicite donc une entité au sein du réseau de communication, pour obtenir un identifiant de tranche et les paramètres de taxation liés à la tranche, ces paramètres précisant les conditions tarifaires associées au transport de l'application sur la tranche de réseau correspondant à l'identifiant. Il est possible que, pour une application, plusieurs tranches de réseau puissent être proposées par l'entité de gestion avec pour chacune des conditions tarifaires différentes.

A partir de ces informations, le dispositif d'accès peut d'une part identifier la tranche de réseau relative à l'application qui vient d'être activée mais aussi obtenir les conditions tarifaires relatives à la tranche de réseau, lui permettant ainsi, lorsque plusieurs tranches de réseau sont proposées, de sélectionner une tranche de réseau en connaissant a priori le type de taxation, les avantages en termes de taxation ou bien les caractéristiques de répartition des coûts entre les acteurs intervenant pour la fourniture des données. Ces informations sont notamment importantes lorsque le dispositif d'accès est utilisé pour connecter des terminaux dont le gestionnaire est différent du gestionnaire du dispositif d'accès ou bien lorsqu'il est souhaitable de pouvoir identifier des données de façon simple, par exemple en associant une application à une tranche de réseau ayant des paramètres de taxation spécifiques, et de taxer ces données conformément aux paramètres de taxation reçus. Les paramètres de taxation peuvent être spécifiques ou non à une tranche de réseau et une tranche de réseau peut comprendre plusieurs paramètres de taxation. Le dispositif d'accès intervient dans le choix de la tranche de réseau, en s'appuyant notamment sur les paramètres reçus, et peut ainsi initialiser la taxation des flux relatifs à l'applicatif conformément aux paramètres reçus, par exemple en transmettant un message à l'équipement de gestion des tranches de réseau. Ainsi, le dispositif d'accès contribue au choix de la tranche de réseau et donne son autorisation pour la taxation des flux conformément aux paramètres de taxation de la tranche de réseau choisie.

Selon un aspect de l'invention, le procédé de taxation comprend en outre :
- une étape d'émission à destination de l'entité de gestion des tranches de réseau d'un message de configuration initiale comprenant au moins un paramètre relatif au dispositif d'accès, lors de l'attachement du dispositif d'accès au réseau,
- une étape de réception en provenance de l'entité de gestion d'un message de notification initiale comprenant au moins un identifiant de tranche de réseau et des paramètres de taxation associés aux identifiants.

Lorsque le dispositif d'accès se connecte pour la première fois au réseau, il peut être utile de lui transmettre par défaut certains identifiants de tranche de réseau ainsi que les paramètres de taxation associés. Par exemple, les identifiants de tranche de réseau les plus couramment utilisés, correspondant aux tranches Internet et aux services temps réel par défaut, pourront être ainsi transmis au dispositif d'accès. En outre, en envoyant des paramètres tels que son identité, le réseau d'attachement, le type de connexion ou ses capacités, il est possible pour l'entité de gestion de transmettre des identifiants de tranches de réseau adaptés au contexte du dispositif d'accès. Ainsi un dispositif d'accès attaché à un réseau de l'opérateur A, et correspondant à un routeur mis en oeuvre dans une voiture, peut se voir communiquer les identifiants de tranche de réseau de « gestion » de l'opérateur A, permettant à l'opérateur A de gérer à distance le dispositif, et un identifiant de tranche de réseau permettant de véhiculer les flux d'un service de sécurité, tel que par exemple le service européen d'appels d'urgence pour véhicule (*en anglais e-call*). Les paramètres de taxation sont transmis avec les identifiants de tranche de réseau de façon à ce que le dispositif d'accès puisse, le cas échéant, activer ou non la tranche de réseau ou bien choisir de limiter ou au contraire d'augmenter les données transitant sur cette tranche. Le client d'un dispositif d'accès d'un constructeur automobile peut être par exemple peu enclin à activer une tranche de réseau propre aux applications du constructeur, caractérisée par des coûts d'utilisation élevés et à la charge du client.

Selon un autre aspect de l'invention, le procédé de taxation comprend en outre une étape de sélection par le dispositif d'accès d'un identifiant de tranche de réseau et des paramètres de taxation associés.

Si le dispositif d'accès obtient plusieurs identifiants de tranche de réseau pour une information relative à une application transmise, il peut choisir la tranche de réseau correspondant à l'identifiant ayant des paramètres de taxation correspondant à ses critères. Ainsi, s'il obtient un identifiant d'une première tranche de réseau dont la facturation est indiquée comme nulle et une tranche de réseau avec des paramètres indiquant une facturation en fonction du volume des données, il choisira probablement l'identifiant de la première. Cette étape de sélection est optionnelle car le dispositif d'accès peut par exemple ne sélectionner aucun identifiant et se connecter aux différentes tranches de réseau, le choix de transmettre des flux de données sur une tranche de réseau ou une autre pouvant dépendre d'autres paramètres, typiquement de qualité de service. Dans le cas où l'entité de gestion ne souhaite pas laisser le choix de la tranche de réseau à sélectionner entièrement au dispositif d'accès, elle transmettra au dispositif d'accès un seul identifiant de tranche de réseau ou l'ensemble des identifiants des tranches auxquelles doit se connecter le dispositif d'accès.

Selon un autre aspect de l'invention, le procédé de taxation comprend en outre une étape d'émission par le dispositif d'accès d'un message d'acceptation comprenant l'identifiant de tranche de réseau sélectionné.

Dans le but d'informer l'entité de gestion du choix par le dispositif d'accès des tranches de réseau sélectionnées, le dispositif transmet un message d'acceptation comprenant l'identifiant de tranche de réseau sélectionné. Le message d'acceptation peut en outre comprendre les paramètres de taxation associés à la tranche de réseau, notamment dans le cas où une tranche de réseau pourrait avoir des paramètres de taxation à choisir par le dispositif d'accès parmi l'ensemble de paramètres reçus. Ce message peut être avantageusement utilisé par le dispositif de gestion pour informer d'autres entités, par exemple les serveurs de taxation et les entités en charge de recueillir et de compter les données émises sur la tranche de réseau. Ce message peut ainsi être utilisé comme un déclencheur du comptage des données par les entités en charge du comptage, de la taxation et de la facturation.

Selon un autre aspect de l'invention, le procédé de taxation comprend en outre une étape d'émission, à destination de l'entité de gestion des tranches de réseau, d'un message de refus.

Notamment dans le cas où l'identifiant de tranche de réseau et les paramètres de taxation associés ne conviennent pas au dispositif d'accès, celui-ci peut refuser ceux-ci en émettant un message à destination du dispositif de gestion indiquant à ce dernier que les identifiants de tranches de réseau reçus et les conditions tarifaires ne lui conviennent pas. Le dispositif d'accès peut ainsi émettre un message de refus s'il décide de ne pas sélectionner de tranche de réseau pour une application donnée ou pour un terminal donné. A la réception de ce message de refus, le dispositif de gestion peut d'une part informer les entités en charge de la taxation que les données relatives à l'application ne sont pas facturées selon les paramètres proposés et d'autre part optionnellement proposer d'autres identifiants avec d'autres paramètres de taxation.

Selon un autre aspect de l'invention, le procédé de taxation comprend en outre une étape de réception d'un message de recommandation comprenant l'identifiant d'une autre tranche de réseau, dite par défaut.

Dans le cas où le dispositif d'accès a émis un message de refus concernant les identifiants de tranche de réseau et les paramètres de taxation proposés par l'entité de gestion, cette dernière peut proposer au dispositif d'accès un identifiant de tranche de réseau dit par défaut ayant des paramètres de taxation probablement plus acceptables pour le dispositif d'accès. Cette tranche peut être par exemple la tranche de réseau utilisée pour les applications Internet ne requérant pas de contraintes et dont la taxation est réalisée par exemple en fonction du volume de données transmis sur la tranche de réseau et en conformité avec le type de contrat du dispositif d'accès. Dans le cas où il n'existe pas d'accord particulier entre le terminal activant l'application et le dispositif d'accès, l'utilisation d'une tranche de réseau « Internet par défaut » ne garantissant aucune qualité de service voire de disponibilité autre que « best effort » peut être privilégiée.

Selon un autre aspect de l'invention, le procédé de taxation comprend en outre une étape de réception d'un message de modification de paramètres de taxation associés à une tranche de réseau.

Les paramètres de taxation peuvent nécessiter d'être mis à jour pour un identifiant de tranche de réseau donné ou pour plusieurs identifiants de tranche de réseau. Ainsi un changement de politique tarifaire peut nécessiter d'informer les dispositifs d'accès de ces nouvelles conditions via l'emploi de nouveaux paramètres de taxation. De même si la taxation pour une tranche de réseau donnée est en fonction d'un certain volume de données, il peut être nécessaire d'informer le dispositif d'accès des conditions tarifaires correspondant au dépassement du volume de données pour une tranche de réseau. Cette information peut être mise à profit par le dispositif d'accès par exemple pour informer le gestionnaire du terminal ayant activé l'application d'un problème de sécurité détecté à partir du volume de données important constaté ou pour informer le gestionnaire du terminal de nouvelles dispositions dans le contrat liant le gestionnaire du dispositif d'accès et l'opérateur gestionnaire du terminal.

Selon un autre aspect de l'invention, dans le procédé de taxation, l'étape de détection est réalisée par la réception de données relatives à l'application en provenance d'un terminal attaché au dispositif d'accès..

La détection de l'activation d'une application peut être réalisée suivant différentes méthodes. Si l'application est mise en oeuvre sur le dispositif d'accès, le dispositif d'accès est directement informé de l'exécution d'une application par le système d'exploitation notamment. Dans le cas où une application est exécutée sur un terminal connecté au dispositif d'accès, par exemple en utilisant une connexion Wi-Fi ou Bluetooth, le dispositif d'accès peut détecter le lancement d'une application nécessitant la demande d'une tranche de réseau et des paramètres de taxation, en analysant le trafic reçu sur le lien Bluetooth ou Wi-Fi. Les données reçues par le dispositif d'accès peuvent correspondre à des données issues de l'application activée ou bien à des données dites de commande transmises par le terminal au dispositif d'accès indiquant qu'une nouvelle application est activée ; les données de commande indiquant le type d'application de façon à obtenir une tranche de réseau et des paramètres de taxation adaptés à l'application.

Selon un autre aspect de l'invention, le procédé de taxation comprend en outre
- une étape d'émission, à destination d'un terminal attaché au dispositif d'accès, d'un message d'information comprenant une donnée relative à l'au moins un identifiant de tranche de réseau et les paramètres de taxation associés à l'au moins un identifiant,
- une étape de réception, en provenance du terminal d'un message de recommandation comprenant une information relative à l'initialisation de la taxation.

Le dispositif d'accès, lorsqu'il reçoit les identifiants de tranche et les paramètres de taxation associés, transmet au terminal ayant activé l'application, pour laquelle une tranche de réseau est à déterminer, un message d'information pour obtenir une recommandation sur l'identifiant de tranche à sélectionner. Le terminal peut par exemple requérir l'avis de l'utilisateur pour une facturation associée à une tranche et à partir de cet avis, informer le dispositif d'accès sur son accord ou son désaccord pour le type de taxation proposé. Ainsi, le dispositif d'accès peut s'assurer de l'accord du terminal, et donc de l'utilisateur, avant de choisir un identifiant et les paramètres de taxation associés, et d'initialiser la taxation des données pour l'application activée sur le terminal. Ces messages échangés entre le dispositif de taxation et le terminal sont notamment importants lorsque le dispositif de taxation obtient des nouveaux paramètres de taxation pour un identifiant de tranche de réseau donné.

Selon un autre aspect de l'invention, dans le procédé de taxation, l'entité de gestion est un dispositif NSSF.

Le dispositif NSSF (en anglais *Network Slice Selection Fonction*) a pour objet d'attribuer une tranche de réseau correspondant aux besoins d'un terminal. Cette fonction, spécifiée dans le document 3GPP (en anglais *3rd Generation Partnership Program*) TS 23.501 v1.2.0 (Juillet 2017), peut avantageusement transmettre au terminal des paramètres de taxation correspondant aux tranches de réseau. Le dispositif NSSF peut obtenir ces paramètres de taxation du système de taxation de façon notamment à prendre en compte les accords entre l'opérateur transmettant les informations au terminal et les gestionnaires des terminaux et de la passerelle.

Selon un autre aspect de l'invention, dans le procédé de taxation, les paramètres de taxation sont compris dans des données S-NSSAI.

Les données S-NSSAI (en anglais *Single Network Slice Sélection Assistance Information*) sont transmises par un dispositif NSSF pour véhiculer diverses informations relatives à une tranche de réseau à attribuer à un terminal. Les données S-NSSAI, spécifiées dans le document 3GPP TS 23.501 v1.2.0 (Juillet 2017), comprennent deux champs intitulés SST (en anglais *Slice*/*Service type*) et SD (en anglais *Slice Differentiator*). Le champ SST inclut des informations relatives aux services supportés en termes de caractéristiques et de comportement tandis que le champ SD comprend des informations complémentaires. Les paramètres de taxation peuvent avantageusement être transmis dans le champ SD des données S-NSSAI transmises au terminal.

Les différents aspects du procédé de taxation qui viennent d'être décrits peuvent être mis en oeuvre indépendamment les uns des autres ou en combinaison les uns avec les autres.

L'invention concerne également un dispositif de de taxation des données d'une application transmises sur une tranche d'un réseau de communication, mis en oeuvre dans un dispositif d'accès au réseau selon la revendication 13.

Ce dispositif, apte à mettre en oeuvre dans tous ses modes de réalisation le procédé de taxation qui vient d'être décrit, est destiné à être mis en oeuvre dans un dispositif d'accès peut être un équipement pour clientèle résidentielle (box, cpe (en anglais Customer Premises Equipment) ou clientèle professionnelle, connecté à un réseau fixe ou à un réseau mobile. Le dispositif d'accès peut également être un terminal, un modem, un dispositif femtocell, etc....

L'invention concerne aussi un système de de taxation comprenant
- un dispositif d'accès comprenant un dispositif de taxation,
- une entité de gestion des tranches de réseau comprenant
   - un récepteur, apte à recevoir un message d'identification comprenant une information relative à l'identification de l'application,
   - un émetteur, apte à émettre un message de notification comprenant au moins un identifiant de tranche de réseau et des paramètres de taxation associés à l'au moins un identifiant,
   - un module de sélection, apte à sélectionner au moins un identifiant de tranche de réseau et des paramètres de taxation associés à l'au moins un identifiant.

L'invention concerne aussi un programme d'ordinateur comprenant des instructions pour la mise en oeuvre des étapes du procédé de taxation qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions du programme d'ordinateur tel que mentionné ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente une vue simplifiée d'une organisation d'une infrastructure de communication selon la technique antérieure,
- la figure 2 présente une infrastructure de communication selon un aspect de l'invention,
- la figure 3 présente un aperçu du procédé de taxation des données d'une application selon un premier mode de réalisation de l'invention,
- la figure 4 présente un aperçu du procédé de taxation des données d'une application selon un deuxième mode de réalisation de l'invention,
- la figure 5 présente un exemple de structure d'un dispositif de taxation des données d'une application, selon un aspect de l'invention.

### 5. Description détaillée d'au moins un mode de réalisation de l'invention

Dans la suite de la description, on présente des exemples de plusieurs modes de réalisation de l'invention dans une infrastructure de communication mobile mais l'invention peut également être mise en oeuvre dans une infrastructure de réseau fixe sachant que les infrastructures en cours de définition au 3GPP visent aussi bien les infrastructures fixes que mobiles.

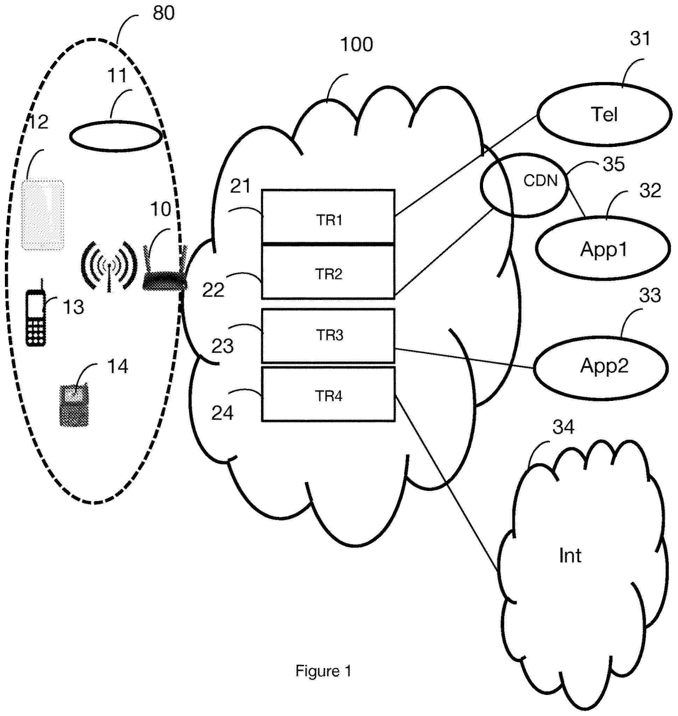

On se réfère tout d'abord à la **figure 1** qui présente une vue simplifiée d'une organisation d'une infrastructure de communication selon la technique antérieure.

L'infrastructure de communication 100 est organisée en tranches de réseau. Une tranche de réseau est mise en oeuvre pour assurer l'acheminement de données ayant des caractéristiques communes. Ces caractéristiques peuvent être relatives à des critères de qualité de service, à des critères de sécurité, à des types de terminaux, à des données émises pour une application spécifique voire pour des données propres à un fournisseur d'application déterminé. L'infrastructure de communications 100 achemine les données en provenance et à destination du réseau 80. L'infrastructure 100 achemine des données d'autres réseaux et terminaux et représente par exemple une infrastructure de communication d'un opérateur de télécommunications. Le réseau 80 peut par exemple être un réseau déployé dans une voiture, un train ou bien une maison. L'équipement 10, ou dispositif d'accès du réseau 80, assure la connexion entre le réseau 80 et l'infrastructure 100. Cet équipement est par exemple une passerelle domestique ou bien un routeur mis en oeuvre dans une voiture, un train, etc. L'équipement 10 (aussi appelé passerelle dans la suite du document) assure l'émission et la réception des données pour les terminaux 11, 12, 13, 14 attachés à l'équipement 10 par des liens filaires de type Ethernet, électriques, fibre optique, ou par des liens sans fils tels que par exemple des liens Bluetooth ou Wi-Fi. Le réseau 80 est considéré dans la figure 1 comme un réseau de communications d'un véhicule. La tranche TR1 21 est utilisée par exemple pour les données émises par le capteur 11 remontant des informations de diagnostic de la voiture vers une plate-forme Tel 31 du constructeur du véhicule, la plate-forme étant accessible également à des partenaires du constructeur tels que des équipementiers et des entreprises de sécurité. La tranche TR2 22 est utilisée pour l'accès à des contenus vidéo et audio proposés par un fournisseur de contenus via une plate-forme de diffusion App1 32 et un serveur CDN 35. La tranche de réseau TR3 23 achemine les données relatives à la conduite assistée vers une application App2 33 spécifiquement mise en oeuvre pour ce service. La tranche TR3 23 requiert une disponibilité et une faible latence pour les données. Enfin, la tranche TR4 24 achemine les données du véhicule vers l'Internet Int 34. Les terminaux 11, 12, 13, 14 peuvent dans certains cas ne transmettre des données que pour une seule tranche ou bien sur des tranches différentes en fonction de l'application générant ou recevant les données. Il n'existe pas a priori de limitation quant au nombre de tranches pouvant être mises en oeuvre dans l'infrastructure 100. L'équipement 10 peut lui-même transmettre des données vers des applications ou plates-formes sur une ou plusieurs tranches déployées dans l'infrastructure 100. Dans les techniques relevant de l'art antérieur, telles que décrites dans les spécifications 3GPP TR 23.799 v14.0.0 (Décembre 2016) et 3GPP TS 23.501 v1.1.0 (Juillet 2017), les tranches de réseau sont mises en oeuvre entre le terminal se connectant à l'infrastructure de communications, représenté dans la figure 1 par l'équipement 10, et les plateformes telles que Tel 31, App1 32..., sans prendre en compte les besoins des terminaux attachés à l'équipement 10 et sans qu'aucune information relative à la taxation des données échangées sur les tranches de réseau ne soient transmises.

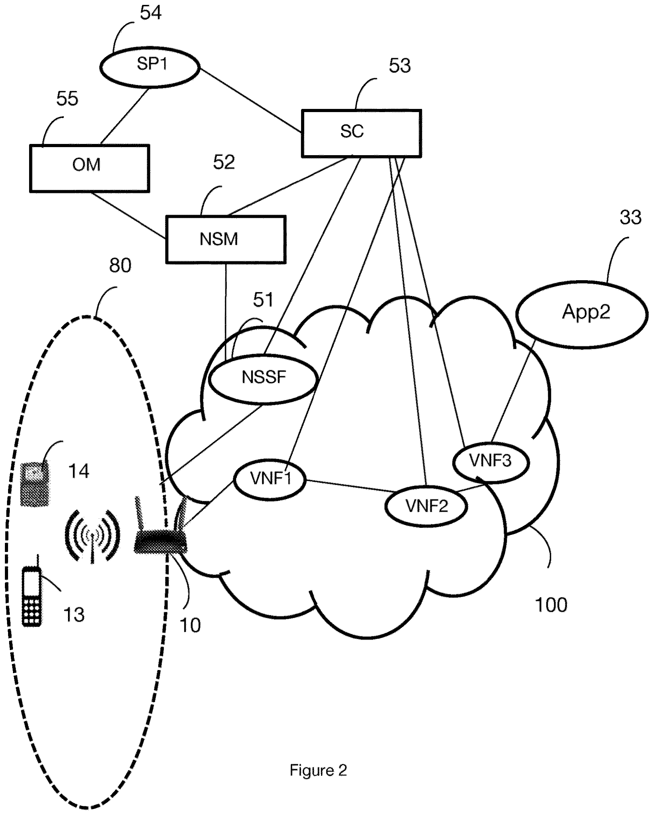

En relation avec la **figure 2**, on présente un aperçu d'une infrastructure de communication selon un aspect de l'invention.

Le réseau de communication 80 comprend deux terminaux 13, 14. Les terminaux peuvent être indifféremment des smartphones, des tablettes, des capteurs ou tout dispositif en mesure de communiquer par un lien filaire ou sans fil avec la passerelle 10. La passerelle 10 est connectée au réseau 100 via un lien filaire, tel qu'une fibre ou un lien xDSL (en anglais *Digital Subscriber Line*) ou par un lien sans fil, par exemple via un accès Wi-Fi ou cellulaire (3G, 4G, 5G...). Au sein du réseau de communication 100, une tranche de réseau composé des fonctions virtualisées VNF1, VNF2, VNF3 est représentée. Les tranches de réseau peuvent aussi intégrer des fonctions non virtualisées. A des fins de simplification, une seule tranche de réseau est représentée. La passerelle 10 est également connectée à une entité 51 NSSF (en anglais *Network Slice Sélection Fonction*) en charge de sélectionner les tranches de réseau pour la passerelle 10.

L'entité 54 SP1 est une plate-forme de commande gérée par le constructeur du véhicule dans lequel est mis en oeuvre le réseau 80. Le constructeur, via la plate-forme 54, émet une prise de commande vers l'entité 55 OM (en anglais *Order Management*) de l'opérateur de l'infrastructure 100 pour une offre de connectivité. Cette prise de commande pour l'application 33 App2, dont les données sont acheminées par l'opérateur d'infrastructure 100, est décrite à partir de paramètres divers parmi lesquels Service_Type, Split_Billing, Conditions_Split_Billing, Split_Billing_partners. L'opérateur met en place une entité 53 SC (en anglais *Service Charging*) en charge de la facturation des usages.

Les paramètres du Service_Type sont par exemple loT (en anglais *Internet Of Things*), eMBB (en anglais *enhanced Mobile BroadBand*), eMBB premium pour garantir une qualité de service meilleure pour ces flux, ou eMBB critique pour garantir une fiabilité des données et une faible latence.

Le paramètre Split_Billing indique si la facturation partagée entre les différents acteurs doit être activée ou pas. Si elle est activée, des acteurs différents, tels que l'opérateur de l'infrastructure 100 et le constructeur du véhicule obtiennent chacun une rétribution.

Les paramètres du paramètre Conditions_Split_Billing consistent par exemple à préciser les conditions suivantes à appliquer :
- facturation en mode pré-payé ou en mode post-payé,
- entité de facturation dédiée à la tranche de réseau ou non,
- conditions de facturation partagée, en fonction des ressources consommées ou en fonction d'un seuil de données transmises, par exemple.

Le paramètre Split_Billing_partners indique les partenaires qui seront facturés suivant les conditions ci-dessus.

A partir de la prise de commande reçue, l'entité 55 OM transmet une demande de mise en oeuvre de la commande à l'entité 52 NSM (en anglais *Network Slice Manager*). La demande intègre les paramètres reçus de l'entité 54 SP1 lors de la prise de commande.

L'entité 52 NSM définit les ressources réseau à déployer à partir de la demande reçue. Cette entité 52 NSM définit également la politique de taxation à appliquer pour la demande et transmet cette politique à l'entité 53 SC. L'entité 52 NSM définit également la politique de notification de taxation pour l'application correspondant à la prise de commande et transmet cette information à l'entité 51 NSSF (en anglais *Network Slice Sélection Fonction*). L'entité 52 NSM réalise les actions suivantes :
- elle crée un identifiant de tranche de réseau pour l'application ou bien elle associe l'application à une tranche de réseau existante si une tranche de réseau est apte, notamment en terme de qualité de service et de sécurité, à acheminer les données de l'application.
- elle traduit les conditions de taxation en termes de politiques qui devront être appliqués par le système de taxation et notamment l'entité 53 SC.
- elle traduit les conditions de taxation en termes de paramètres de taxation qui seront transmis aux terminaux lorsqu'ils transmettront un message d'identification comprenant l'information relative à l'application pour laquelle la prise de commande a été formulée.

L'entité 53 SC transmet ensuite les informations de taxation aux instances virtualisées VNF1, VNF2, VNF3 intervenant pour l'acheminement des données relatives à l'application vers le serveur 33 App2. Les instances VNF1, VNF2 et VNF3 transmettront des informations de taxation à l'entité de facturation 53 lors du transport des données relatives à l'application 33 App2. Si les instances VNFs transportent des données relatives à des tranches de réseau distinctes, l'identifiant de tranche de réseau correspondant à l'application 33 App2 doit être associé aux données relatives à l'application 33 App2 afin que chaque VNF puisse transmettre les informations de taxation correspondant aux données de l'application 33 App2.

Une entité d'orchestration, non représentée sur la figure 2, peut également intervenir pour la mise en oeuvre de la tranche de réseau pour l'acheminement des données entre les VNFs.

La procédure décrite dans la figure 2 permet d'associer une application à une tranche de réseau et de faire correspondre des paramètres de taxation à l'application. Ainsi les données émises par les terminaux 13 et 14 ayant activé l'application App2 à destination du serveur 33 App2 et transmises par la passerelle 10, sont acheminées par les VNF1, VNF2, VNF3 et des informations de taxation sont transmises par ces VNFs à un système de facturation 53 assurant la facturation des données conformément aux paramètres de taxation spécifiés dans la prise de commande. L'opérateur de l'infrastructure 100 utilise les informations de taxation reçues pour la répartition de la facturation des différents acteurs intervenant dans la fourniture de l'application App2 aux terminaux 13 et 14.

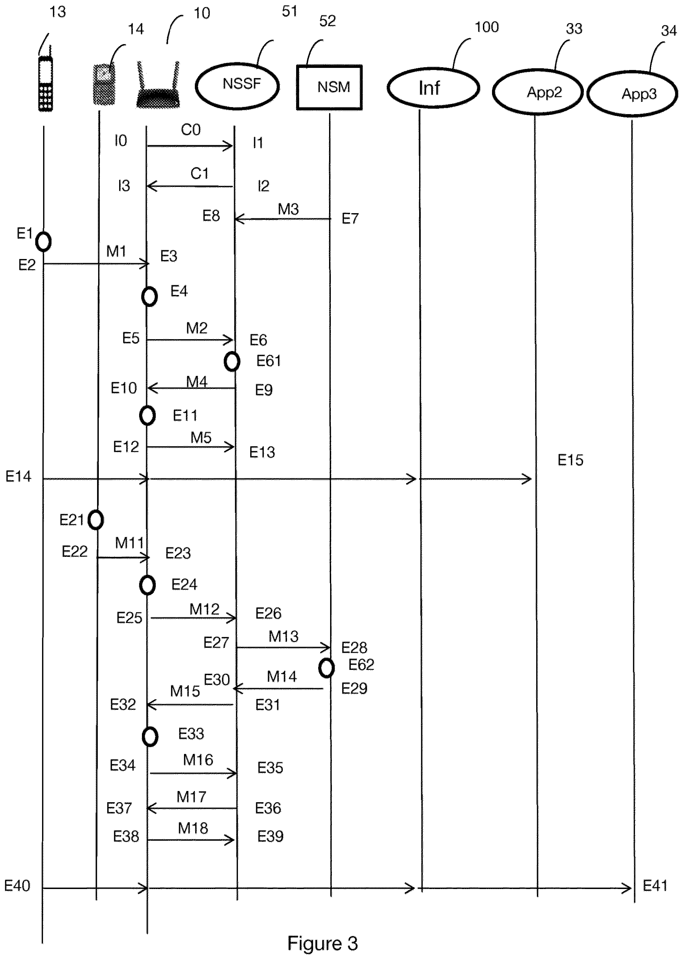

On se réfère maintenant à la **figure 3** qui présente un aperçu du procédé de taxation des données d'une application selon un premier mode de réalisation de l'invention.

La passerelle 10 se connecte à l'infrastructure 100 de communication et transmet lors d'une étape I0 un message C0 de configuration initiale à l'entité 51 de gestion de tranches de réseau. La passerelle peut obtenir l'adresse de l'entité 51 dans un message de type DHCP (en anglais *Dynamic Host configuration Protocol*) pour un réseau fixe ou lors de l'établissement de la connexion PDN (en anglais *Packet Data Network*) pour un réseau mobile, ou bien encore par configuration dans la passerelle. L'entité 51 reçoit le message C0 lors de l'étape I1 et transmet lors d'une étape I2 un message C1 de notification initiale comprenant des identifiants de tranche et des paramètres de taxation associés à ces identifiants. Pour déterminer les identifiants de tranche à transmettre, l'entité 51 utilise un paramètre de la passerelle 10, tel que l'adresse IP (en anglais *Internet Protocol*), l'adresse MAC (en anglais *Medium Access Control*) ou un identifiant de type IMEI (en anglais *International Mobile Equipment Identity*) ou MSISDN (en anglais *Mobile Station Integrated Services Digital Network*). Par exemple, la passerelle 10 peut recevoir lors de l'étape I3 un identifiant de tranche par défaut et les paramètres de taxation associés lui permettant de transmettre et de recevoir des données relatives à des communications Internet ne requérant pas de traitement et de tarification spécifiques.

Lors d'une étape E1, une application App2 est activée sur le terminal Term1 13. L'activation de l'application App2 peut être consécutive à une action d'un utilisateur qui ouvre l'application ou bien elle peut résulter d'une action automatique, par exemple d'un capteur qui émet une donnée vers un serveur.

L'activation de l'application sur le terminal Term1 13 est détectée lors d'une étape E4 par la passerelle 10. La passerelle assure la connectivité des terminaux 13 et 14 avec des réseaux de données. Cette détection, selon un exemple, est réalisée par la réception de données relatives à l'application App2 émises par le terminal Term1 13 ou selon un autre exemple, par l'envoi d'un message de contrôle émis par le terminal Term1 13 à destination de la passerelle 10. Dans le mode de réalisation décrit dans la figure 3, il est considéré que la passerelle 10 détecte lors de l'étape E4 l'activation de l'application App2 sur le terminal Term1 13 par l'envoi de données relatives à l'application App2 dans un message M1 lors de l'étape E2 et la réception de ce message M1 par la passerelle 10 lors de l'étape E3.

Selon une alternative, le dispositif d'accès peut émettre des données relatives à l'application App2 détectée sur une tranche de réseau à laquelle il est connecté ou à laquelle il peut se connecter. Notamment le dispositif d'accès peut transmettre les données sur une tranche de réseau qu'il a reçu lors de l'étape I3. La tranche de réseau peut par exemple être utilisée jusqu'à l'initialisation de la taxation correspondant à la tranche de réseau ultérieurement utilisée pour le transport des données de l'application App2.

Selon une autre alternative, les données de l'application sont mises en mémoire, par exemple dans un « buffer » avant d'être transmises une fois que l'initialisation de la taxation est réalisé par la passerelle 10.

Lors de l'étape E5, la passerelle 10 émet un message M2 d'identification à destination d'une entité 51 de gestion des tranches de réseau de l'infrastructure de communication 100. L'entité 51 de gestion est dans cet exemple un serveur NSSF. Le message M2 est par exemple un message de contrôle. La passerelle 10 peut, selon un exemple, transmettre le message M2 via un dispositif d'accès de l'infrastructure de communication. Ce dispositif d'accès peut être une station de base de type eNodeB si l'infrastructure de communication est un réseau mobile 4G ou de type NR (en anglais *NextGen Radio Access Network*) s'il s'agit d'un réseau 5G. Lors de l'étape E6, le serveur 51 NSSF reçoit le message M2 transmis par la passerelle 10. Le message M2 reçu comprend une information sur l'application App2 détectée par la passerelle 10. L'information peut être, selon un exemple, un identifiant de l'application App2 ou toute autre information permettant d'identifier de façon non ambigüe l'application App2.

A partir de l'information sur l'identifiant de l'application App2 présente dans le message M2, le serveur 51 NSSF sélectionne lors de l'étape E61 une tranche de réseau apte à acheminer les données de l'application App2 dans l'infrastructure de communication 100 ainsi que les paramètres de taxation correspondant à l'acheminement des données de l'application dans la tranche. Il peut s'agir indifféremment d'une tranche de réseau déjà mise en oeuvre dans l'infrastructure de communication 100 ou bien une nouvelle tranche de réseau si les tranches de réseau mises en oeuvre dans l'infrastructure 100 ne permettent pas d'acheminer les données de l'application App2. Pour déterminer la tranche de réseau et les paramètres de taxation, le serveur 51 NSSF peut utiliser les informations transmises par l'entité 52 NSM telle que décrite dans la figure 2 et représentée dans la figure 3 par le message M3 transmis par l'entité 52 NSM lors de l'étape E7 et reçues par le serveur 51 NSSF lors de l'étape E8. Il est à noter que ces étapes E7 et E8 peuvent intervenir à tout moment lors du procédé, y compris après la détection de l'application par la passerelle 10. Le message M3 comprend un identifiant de tranche de réseau ainsi que les paramètres de taxation. Ces paramètres de taxation peuvent être établis à partir des paramètres transmis lors de la prise de commande. Il peut s'agir d'un code hexadécimal ou d'un attribut en format texte permettant d'être interprété par la passerelle 10.

Lors d'une étape E9, le serveur 51 NSSF transmet à la passerelle 10, un identifiant de tranche de réseau correspondant à l'application App2 ainsi que des paramètres de taxation associés à cette tranche de réseau. A partir de ces attributs, la passerelle 10 peut déterminer le type de taxation et notamment si l'application App2 exécutée par le terminal 13 sera facturée par l'opérateur de l'infrastructure 100 et/ou par exemple par le constructeur du véhicule ayant émis une prise de commande, en référence à la figure 2. Le serveur 51 NSSF émet un message M4 comprenant la tranche de réseau et les paramètres de taxation associés. Selon un exemple non illustré, le serveur 51 NSSF peut transmettre plusieurs identifiants de tranche auxquels sont associés des paramètres de taxation. La passerelle réceptionne le message M4 lors d'une étape E10. Il est considéré que, dans ce mode de réalisation, la passerelle 10 reçoit plusieurs identifiants de tranche de réseau et des paramètres de taxation associés à chaque tranche de réseau.

Lors d'une étape E11, la passerelle 10 sélectionne un identifiant de tranche de réseau parmi les identifiants reçus. Cette sélection est possiblement réalisée en comparant les paramètres de taxation associés à chaque tranche de réseau. La passerelle pourra par exemple sélectionner une tranche de réseau dont les paramètres de taxation déterminent une facturation moindre ou à la charge d'une autre entité que celle administrant la passerelle 10. Selon un autre exemple, la passerelle 10 relaie les informations au terminal 13 qui sélectionne elle-même la tranche de réseau. Cela peut est réalisé via la notification sur l'écran du terminal 13 des conditions de facturation pour un service de diffusion.

Lors d'une étape E12, la passerelle 10 transmet au serveur 51 NSSF un message M5 comprenant l'identifiant de tranche sélectionné. Il peut, selon un exemple, également transmettre les paramètres de taxation associés à la tranche sélectionnée. Lors d'une étape E13, ce message M5 est réceptionné par le serveur 51 NSSF. A la réception du message M5 initialisant la taxation des données de l'application, le serveur 51 NSSF peut, selon un exemple, informer les entités en charge de la taxation ainsi que les entités en charge de la mise en oeuvre de la tranche de réseau. Consécutivement au message M5 reçu et à la transmission par le serveur 51 de l'information d'initialisation de la taxation transmise par la passerelle 10 aux équipements en charge de la taxation, les données de l'application App2 sont taxées conformément aux paramètres de taxation associés à la tranche de réseau sélectionnée. Ainsi, par exemple, l'équipement assurant la connexion de la passerelle 10 au réseau (ou infrastructure) 100 peut émettre des tickets de taxation correspondant au volume de données de l'application App2 vers un équipement de taxation en cas de taxation « offline » ou recevoir des crédits de taxation en provenance d'un équipement de taxation en cas de taxation dite « online ». Ces données de taxation sont ensuite potentiellement utilisées pour la facturation des différentes entités conformément aux paramètres de taxation de la tranche en cas de facturation partagée.

Lors d'une étape E14, le terminal 13 émet les données relatives à l'application App2 à destination du serveur applicatif 33 App2, ces données étant reçues puis transférées par la passerelle 10 à destination des instances virtualisées de la tranche de réseau de l'infrastructure 100 de communication, la tranche de réseau correspondant à l'identifiant sélectionné lors de l'étape E11. Le serveur 51 NSSF aura pu auparavant transmettre une information comprenant un identifiant de l'équipement d'accès de la tranche auquel la passerelle 10 doit émettre les données relatives à l'application App2.

Lors d'une étape E21, une application App3 sur le terminal 14 est démarrée. Le terminal 14 est également attaché par une liaison filaire ou sans-fil à la passerelle 10 qui est elle-même attachée à l'infrastructure 100 de communication. Les étapes suivantes E22, E23, E24, E25 et E26 sont respectivement identiques aux étapes E2, E3, E4, E5, E6.

Le serveur 51 NSSF ne dispose pas d'identifiant de tranche de réseau ni de paramètres de taxation associés pour l'application App3. Pour cette raison, il sollicite lors d'une étape E27 le serveur 52 NSM en transmettant un message M13 comprenant une requête pour une tranche de réseau pour l'application App3. Le serveur 52 NSM reçoit le message M13 lors de l'étape E28 et associe une tranche de réseau, par exemple suite à une prise de commande reçue, telle que décrite dans la figure 2. Le serveur 52 NSM sélectionne lors d'une étape E62 une tranche de réseau et des paramètres de taxation pour les données de l'application App3. Si l'application App3 est par exemple une vidéo que le terminal 13 souhaite visualiser en streaming, le serveur 52 NSM pourra retourner une tranche de réseau proposant un débit important mais ayant des caractéristiques de qualité de service peu exigeantes notamment en terme de latence et avec une taxation en fonction du volume de données de l'application App3 transmises à la charge du gestionnaire de la passerelle 10.

Lors de l'étape E29, le serveur 52 NSM émet un message M14 comprenant l'identifiant de la tranche de réseau sélectionnée et les paramètres de taxation de l'identifiant pour l'application App3 au serveur 51 NSSF. Le serveur 51 NSSF réceptionne le message lors de l'étape E30.

Lors de l'étape E31, le serveur 51 NSSF transmet l'identifiant de la tranche de réseau et les paramètres de taxation relatifs à l'identifiant dans un message M15 reçu par la passerelle 10 lors de l'étape E32. Le serveur 51 NSSF peut mémoriser l'identifiant de tranche reçu et les paramètres de taxation associés pour l'application App3 de façon à pouvoir les communiquer à un équipement lors d'une sollicitation future.

Lors de l'étape E33, la passerelle 10 décide de refuser l'identifiant et les paramètres de taxation associés reçus du serveur 51 NSSF, par exemple en raison de la taxation des données de l'application au volume et parce que cette taxation est à la charge du gestionnaire de la passerelle 10.

Lors de l'étape E34, la passerelle 10 émet un message M16 de refus de l'identifiant de tranche de réseau et des paramètres de taxation reçus. Ce message M16 est reçu par le serveur 51 NSSF lors de l'étape E35.

A la réception du message M16, le serveur 51 NSSF émet un message M17 comprenant une tranche de réseau dite par défaut avec des paramètres de taxation correspondant à un coût forfaitaire à la charge du gestionnaire de la passerelle 10, lors de l'étape E36. Cette tranche de réseau offre un débit non garanti et limité ainsi que des caractéristiques de qualité de service minimales. Le message M17 de recommandation est reçu par la passerelle 10 lors de l'étape E37. La passerelle 10, lors de l'étape E38 acquitte la réception du message M17 par l'envoi d'un message d'acquittement M18 à destination du serveur 51 NSSF, déclenchant ainsi la taxation conformément aux paramètres de taxation présents dans le message M17 pour la tranche de réseau par défaut. Le serveur 51 NSSF, à la réception du message M18 lors de l'étape E39, informe les entités en charge de la taxation et de la mise en oeuvre des tranches de réseau, que les données de l'application App3 seront acheminées sur la tranche de réseau par défaut avec une taxation au forfait.

Les données de l'application App3 émises par le terminal 13 lors de l'étape E40, sont acheminées vers la passerelle 10 puis vers l'infrastructure 100. Au sein de l'infrastructure 100, les données de l'application App3 sont transmises via la tranche de réseau par défaut jusqu'au serveur applicatif 34 App3 qui les reçoit lors de l'étape E41.

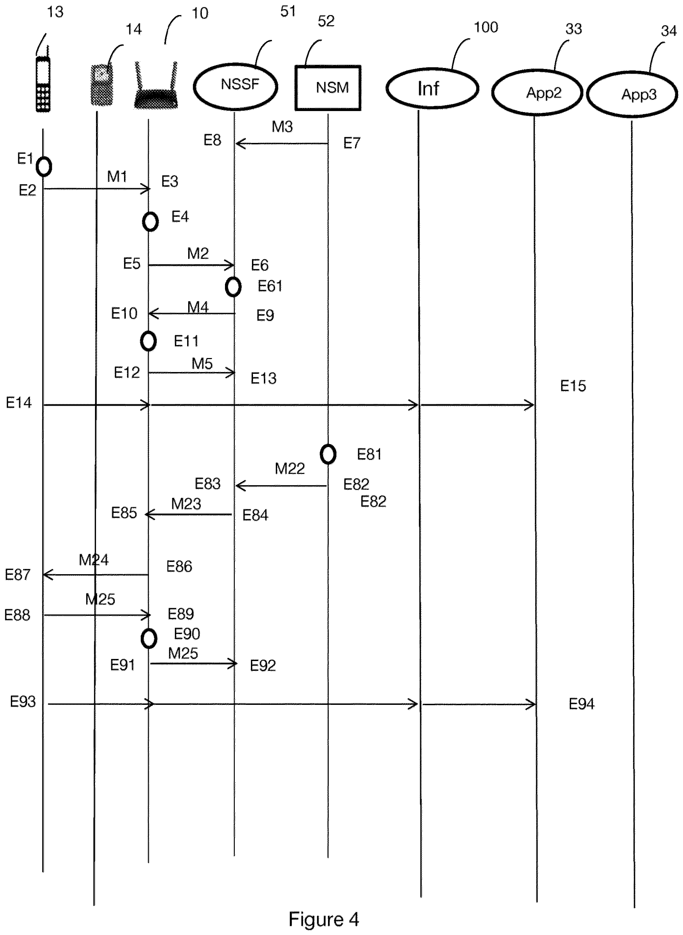

On se réfère maintenant à la **figure 4** qui présente un aperçu du procédé de taxation des données d'une application selon un deuxième mode de réalisation de l'invention.

Les premières étapes depuis l'étape E1 à l'étape E15 sont identiques aux étapes E1 à E13 décrites dans la figure 3. Lors de l'étape E14, le terminal 13 émet les données relatives à l'application App2 à destination du serveur applicatif 33 App2, ces données étant reçues puis transférées par la passerelle 10 à destination des instances virtualisées de la tranche de réseau de l'infrastructure 100 de communication, la tranche de réseau correspondant à l'identifiant sélectionné lors de l'étape E11. On considère dans ce mode de réalisation que la tranche de réseau sélectionnée lors de l'étape E11 par la passerelle 10 est une tranche de réseau TR1 dont la tarification est liée à des volumes de données transmises et reçues par le terminal 13 avec un plafonnement du volume de données admises et indiquée dans la prise de commande initialement reçue. Cela signifie qu'à partir d'un certain volume de données de l'application App2 échangées par le terminal 13 avec l'application App2 33, le tarif des données supplémentaires devient largement supérieur.

L'entité 52 NSM détecte lors d'une étape E81 que le plafond de données autorisé pour un tarif T1 est atteint. Cette détection est mise en oeuvre par exemple par la réception d'un message non représenté sur la figure 4 en provenance d'un équipement en charge du comptage et de la taxation des services (comme par exemple l'entité 53 SC représenté sur la figure 2 mais non représenté sur la figure 4). Cela signifie que la taxation des données échangées sur la tranche de réseau utilisée pour transmettre les données de l'application App2 va évoluer.

L'entité 52 NSM transmet lors d'une étape E82 à l'entité 51 NSSF un message M22 indiquant que le plafond de données pour la tarification T1 est atteint pour le terminal 13. Le serveur 51 NSSF reçoit le message M22 lors de l'étape E83.

A la réception de ce message M22, il transmet à la passerelle 10 un message M23 comprenant des identifiants de tranche de réseau et les paramètres de tarification associés aux tranches. Notamment, il transmet les nouveaux paramètres de tarification de la tranche TR1 pour les données de l'application App2.

Selon un autre exemple, le serveur 51 NSSF ne transmet que l'identifiant de tranche correspondant à la tranche TR1 et les nouveaux paramètres de tarification.

A la réception du message M23 lors de l'étape E85, la passerelle 10 transmet lors de l'étape E86 au terminal 13 un message M24 comprenant une information indiquant que le plafond de données pour l'application App2 au tarif T1 est atteint et que les futures données de l'application App2 le seront à des conditions tarifaires T2. Le terminal 13, à la réception du message M24 lors de l'étape E87, indique à l'utilisateur par un message d'alerte que le plafond de données pour l'application App2 est dépassé et que les conditions de facturation sont modifiées, par exemple par un affichage spécifique sur l'écran.

L'utilisateur, selon une méthode non décrite dans ce document, prend une décision sur la volonté de continuer à utiliser l'application App2 et transmet à la passerelle 10 lors de l'étape E88 un message M25 comprenant une information indiquant à la passerelle 10 que des données relatives à l'application App2 seront encore transmises et reçues par le terminal 13.

A la réception du message M25 lors de l'étape E89, la passerelle 10 sélectionne lors de l'étape E90 une tranche de réseau pour acheminer les données de l'application App2.

Selon un premier exemple, le terminal 13 indique à la passerelle 10 dans le message M25 qu'il paiera les données de l'application App2 au nouveau tarif T2. La passerelle sélectionne alors la tranche de réseau utilisée précédemment mais avec de nouveaux paramètres de taxation T2.

Selon un deuxième exemple, le terminal 13 n'indique pas à la passerelle 10 qu'il paiera les données de l'application App2 aux conditions tarifaires T2 ou indique qu'il ne les paiera pas, et la passerelle sélectionne une autre tranche de réseau pour acheminer les données de l'application App2 pour le terminal 13 et choisit par exemple une tranche de réseau par défaut offrant moins de garanties en terme de sécurité, de qualité de service, de fiabilité mais ayant des paramètres de taxation moins coûteux que le tarif T2.

Selon un troisième exemple, la passerelle 10 transmet un message au serveur 51 NSSF pour solliciter le support d'une nouvelle tranche de réseau et de paramètres de taxation. Le serveur 51 NSSF peut solliciter le serveur 52 NSM pour obtenir ces informations. Une nouvelle prise de commande peut être, selon une alternative, proposée au fournisseur si la tarification suppose une prise en charge par ce fournisseur.

La passerelle 10 envoie au serveur 51 NSSF lors de l'étape E91 un message M25 comprenant l'identifiant de tranche de réseau sélectionné. Ce message peut optionnellement comprendre également les paramètres de taxation associés à la tranche de réseau sélectionnée. A la réception du message M25 lors de l'étape E92 initialisant la taxation pour les données de l'application App2, le serveur 51 NSSF informe les entités en charge de la taxation et de la mise en oeuvre des tranches de réseau, que les données de l'application App2 émises par le terminal 13 seront acheminées sur la tranche de réseau dont l'identifiant a été transmis par la passerelle 10 dans le message M25.

Les données de l'application App2 émises par le terminal 13 lors de l'étape E93, sont acheminées vers la passerelle 10 puis vers l'infrastructure 100. Au sein de l'infrastructure 100, les données de l'application App3 sont transmises via la tranche de réseau sélectionnée par la passerelle 10 jusqu'au serveur applicatif 33 App2 qui les reçoit lors de l'étape E94, et facturées conformément aux paramètres de taxation sélectionnés par la passerelle 10.

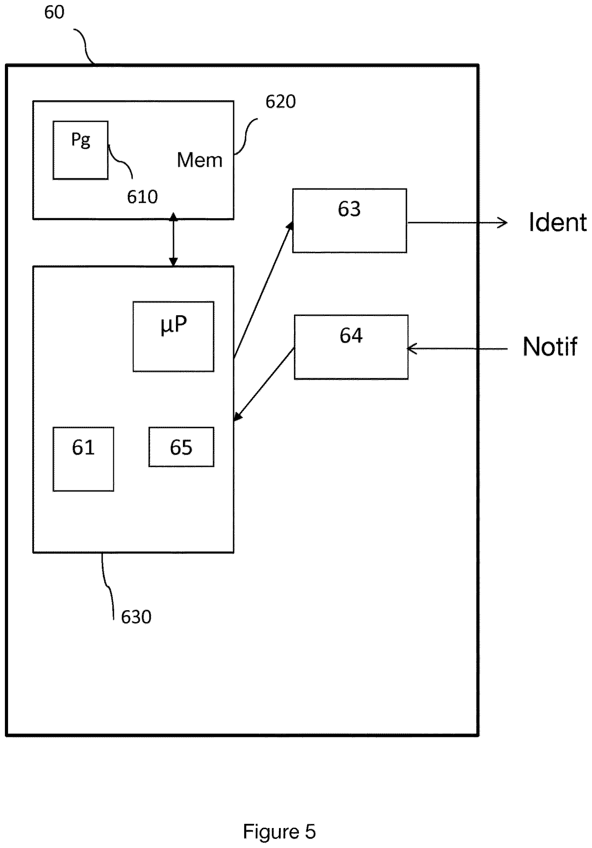

En relation avec la **figure 5**, on présente un exemple de structure d'un dispositif de taxation des données d'une application, selon un aspect de l'invention.

Le dispositif 60 de taxation met en oeuvre le procédé de taxation, dont différents modes de réalisation viennent d'être décrits.

Un tel dispositif 60 peut être mis en oeuvre dans un dispositif d'accès. Le dispositif d'accès peut être un équipement pour clientèle résidentielle ou clientèle professionnelle, connecté à un réseau fixe ou à un réseau mobile. Le dispositif d'accès peut également être un terminal, un modem, un dispositif femtocell, etc...

Par exemple, le dispositif 60 comprend une unité de traitement 630, équipée par exemple d'un microprocesseur µP, et pilotée par un programme d'ordinateur 610, stocké dans une mémoire 620 et mettant en oeuvre le procédé de taxation selon l'invention. A l'initialisation, les instructions de code du programme d'ordinateur 610 sont par exemple chargées dans une mémoire RAM, avant d'être exécutées par le processeur de l'unité de traitement 630.

Un tel dispositif 60 comprend :
- un détecteur 61, apte à détecter une activation de l'application
- un émetteur 63, apte à émettre un message Ident d'identification comprenant une information relative à l'identification de l'application à destination d'une entité de gestion des tranches de réseau,
- un récepteur 64, apte à recevoir en provenance de l'entité de gestion des tranches de réseau un message Notif de notification comprenant au moins un identifiant de tranche de réseau et des paramètres de taxation associés à l'au moins un identifiant,
- un module (65) d'initialisation, apte à initialiser une taxation des données de l'application,

Le dispositif de taxation comprend en outre, selon un mode de réalisation :
- l'émetteur 63, apte à émettre à destination de l'entité de gestion des tranches de réseau un message de configuration initiale comprenant au moins un paramètre du dispositif d'accès lors de l'attachement du dispositif d'accès au réseau,
- le récepteur 64, apte à recevoir en provenance de l'entité de gestion un message d'initialisation comprenant au moins un identifiant de tranche de réseau et des paramètres de taxation associés aux identifiants.

Le dispositif de taxation comprend en outre, selon un autre mode de réalisation :
- l'émetteur 63, apte à émettre à destination d'un terminal (13, 14) attaché au dispositif (10) d'accès, un message (M24) d'information comprenant une donnée relative à l'au moins un identifiant de tranche de réseau et les paramètres de taxation associés à l'au moins un identifiant,
- le récepteur 64, apte à recevoir en provenance du terminal (13, 14) un message (M25) de recommandation comprenant une information relative à l'initialisation de la taxation.

Le dispositif de taxation comprend en outre, selon encore un autre mode de réalisation, un module de sélection d'un identifiant de tranche de réseau et des paramètres de taxation associés.

Le procédé de taxation permet avantageusement de pouvoir conditionner l'attribution et la sélection de tranches de réseaux par un dispositif d'accès, en fonction de paramètres de taxation utilisés pour répartir les charges de mise en oeuvre d'un service et de facturation entre différents acteurs intervenant dans la fourniture de services. Ainsi, un dispositif d'accès peut transmettre des données émises par des terminaux qui lui sont attachés et possiblement gérés par des entités différentes que l'entité gérant le dispositif d'accès sur des tranches de réseau présentant des paramètres de qualité de service, de latence, de débit correspondant à des paramètres de taxation. Notamment, dans le cas où le dispositif d'accès propose à des terminaux des connexions Internet avec des débits et des paramètres de qualité de service différents, les données d'une application activée sur un terminal ayant contractualisé un service à valeur ajoutée avec le dispositif d'accès seront acheminées sur une tranche de réseau plus performante que les données d'une application activée sur un terminal ayant contractualisé une offre « best effort ». Le procédé de taxation permet ainsi de pouvoir enrichir le processus de sélection de tranche de réseau par un dispositif d'accès avec des conditions tarifaires, possiblement négociées avec les terminaux pour lesquels le dispositif d'accès assure la fourniture de connectivité. Ce procédé pourrait en outre permettre à des terminaux de sélectionner un dispositif d'accès en fonction de paramètres de taxation proposés par les dispositifs d'accès.

## Revendications

1. Procédé de taxation des données d'une application transmises sur une tranche d'un réseau (100) de communication, mis en oeuvre dans un dispositif (10) d'accès au réseau (100) et comprenant :
- une étape (E4, E24) de détection de la mise en action ou du démarrage de l'application,
- à la suite de l'étape de détection (E4, E24), une étape (E5, E25) d'émission à destination d'une entité (51) de gestion des tranches de réseau d'un message (M2, M12) d'identification comprenant une information relative à l'identification de l'application détectée,
- une étape (E10, E32) de réception en provenance de l'entité (51) de gestion des tranches de réseau d'un message (M4, M15, M17) de notification comprenant au moins un identifiant de tranche de réseau correspondant à l'application détectée et des paramètres de taxation associés à l'au moins un identifiant de tranche de réseau,
- une étape (E11, E90) d'initialisation d'une taxation des données de la tranche de réseau dont l'identifiant a été sélectionné en fonction des conditions tarifaires liées aux paramètres de taxation de ladite tranche et associées au transport des données sur la tranche de réseau sélectionnée.

2. Procédé de taxation, selon la revendication 1, comprenant en outre préalablement à l'étape (E4, E24) de détection, lors de la connexion du dispositif d'accès au réseau :
- une étape (10) d'émission à destination de l'entité (51) de gestion des tranches de réseau d'un message (C0) de configuration initiale comprenant au moins un paramètre relatif au dispositif (10) d'accès, lors de l'attachement du dispositif d'accès au réseau (100),
- une étape (13) de réception en provenance de l'entité (51) de gestion d'un message (C1) de notification initiale comprenant au moins un identifiant de tranche de réseau (100) par défaut déterminé en fonction de l'au moins un paramètre du dispositif d'accès et des paramètres de taxation associés à l'au moins un identifiant de tranche de réseau par défaut.

3. Procédé de taxation, selon la revendication 1, comprenant en outre une étape (E11, E90) de sélection par le dispositif (10) d'accès d'un identifiant de tranche de réseau et des paramètres de taxation associés à partir des paramètres de taxation associés à l'au moins un identifiant de tranche de réseau reçu dans le cas où le dispositif d'accès obtient plusieurs identifiants de tranche de réseau.

4. Procédé de taxation, selon la revendication 3, comprenant en outre une étape (E12) d'émission par le dispositif (10) d'accès d'un message (M5) d'acceptation comprenant l'identifiant de tranche de réseau sélectionné.

5. Procédé de taxation, selon la revendication 1, comprenant en outre une étape (E34) d'émission, à destination de l'entité (51) de gestion des tranches de réseau, d'un message (M16) de refus.

6. Procédé de taxation, selon la revendication 5, comprenant en outre une étape (E37) de réception d'un message (M17) de recommandation comprenant l'identifiant d'une autre tranche de réseau, dite par défaut.

7. Procédé de taxation, selon la revendication 1, comprenant en outre une étape (E85) de réception d'un message (M23) de modification des paramètres de taxation associés à l'au moins un identifiant de tranche de réseau reçu.

8. Procédé de taxation, selon la revendication 1, où l'étape (E4, E24) de détection est réalisée par la réception de données relatives à l'application en provenance d'un terminal (13, 14) attaché au dispositif (10) d'accès.

9. Procédé de taxation, selon la revendication 1, comprenant en outre :
- une étape (E86) d'émission, à destination d'un terminal (13, 14) attaché au dispositif (10) d'accès, d'un message (M24) d'information comprenant une donnée relative à l'au moins un identifiant de tranche de réseau et les paramètres de taxation associés à l'au moins un identifiant,
- une étape (E88) de réception, en provenance du terminal (13, 14) d'un message (M25) de recommandation comprenant une information relative aux paramètres de taxation reçus.

10. Procédé de taxation, selon la revendication 1, où l'entité (51) de gestion est un dispositif NSSF, Network Slice Sélection Function.

11. Procédé de taxation, selon la revendication 1, où les paramètres de taxation sont compris dans des données S-NSSAI, Single Network Slice Sélection Assistance Information.

12. Procédé de taxation, selon la revendication 1, comprenant en outre une étape d'initialisation de la taxation des données de l'application, en fonction du message de notification reçu,

13. Dispositif de taxation des données d'une application transmises sur une tranche d'un réseau (100) de communication, mis en oeuvre dans un dispositif (10) d'accès au réseau (100) et comprenant :
- un détecteur (61), apte à détecter une mise en action ou un démarrage de l'application,
- un émetteur (63), apte à émettre à la suite de l'étape de détection (E4, E24) à destination d'une entité (51) de gestion des tranches de réseau un message d'identification comprenant une information relative à l'identification de l'application détectée,
- un récepteur (64), apte à recevoir en provenance de l'entité (51) de gestion des tranches de réseau un message de notification comprenant au moins un identifiant de tranche de réseau correspondant à l'application détectée et des paramètres de taxation associés à l'au moins un identifiant de tranche de réseau,
- un module d'initialisation d'une taxation de données, apte à initialiser la taxation des données de la tranche de réseau dont l'identifiant a été sélectionné en fonction des conditions tarifaires liées aux paramètres de taxation de la dite tranche et associées au transport des données sur la tranche de réseau sélectionnée.

14. Système de taxation comprenant
- un dispositif (10) d'accès comprenant un dispositif de taxation selon la revendication 13,
- une entité (51) de gestion des tranches de réseau comprenant
- un récepteur, apte à recevoir le message d'identification comprenant une information relative à l'identification de l'application,
- un module de sélection, apte à sélectionner au moins un identifiant de tranche de réseau correspondant à l'application et des paramètres de taxation associés à l'au moins un identifiant de tranche de réseau
- un émetteur, apte à émettre le message de notification comprenant l'au moins un identifiant de tranche de réseau et les paramètres de taxation associés à l'au moins un identifiant de tranche de réseau.

15. Programme d'ordinateur, **caractérisé en ce qu'**il comprend des instructions pour la mise en oeuvre des étapes du procédé de taxation selon la revendication 1, lorsque ce procédé est exécuté par un processeur.

16. Support d'enregistrement lisible par un dispositif de taxation conforme à la revendication 13, sur lequel est enregistré le programme selon la revendication 15.

## Patentansprüche

1. Verfahren zur Gebührenabrechnung der Daten einer Anwendung, die auf einem Abschnitt eines Kommunikationsnetzwerks (100) übertragen werden, implementiert in einer Zugangsvorrichtung (10) zu dem Netzwerk (100) und beinhaltend:
- einen Schritt (E4, E24) des Detektierens der Aktivierung oder des Starts der Anwendung,
- im Anschluss an den Schritt des Detektierens (E4, E24), einen Schritt (E5, E25) des Sendens, an eine Entität (51) zur Verwaltung der Netzwerkabschnitte, einer Identifikationsmeldung (M2, M12), die eine Information bezüglich der Identifikation der detektierten Anwendung beinhaltet,
- einen Schritt (E10, E32) des Empfangens, von der Entität (51) zur Verwaltung der Netzwerkabschnitte, einer Benachrichtigungsmeldung (M4, M15, M17), die mindestens eine Netzwerkabschnittskennung, die der detektierten Anwendung entspricht, und Gebührenabrechnungsparameter, die mit der mindestens einen Netzwerkabschnittskennung assoziiert sind, beinhaltet,
- einen Schritt (E11, E90) des Initialisierens einer Gebührenabrechnung der Daten des Netzwerkabschnitts, dessen Kennung ausgewählt wurde, in Abhängigkeit von den Tarifbedingungen, die mit den Gebührenabrechnungsparametern des Abschnitts verbunden und mit dem Transport der Daten auf dem ausgewählten Netzwerkabschnitt assoziiert sind.

2. Verfahren zur Gebührenabrechnung nach Anspruch 1, das vor dem Schritt des Detektierens (E4, E24), während sich die Zugangsvorrichtung mit dem Netzwerk verbindet, ferner Folgendes beinhaltet:
- einen Schritt (10) des Sendens, an die Entität (51) zur Verwaltung der Netzwerkabschnitte, während sich die Zugangsvorrichtung mit dem Netzwerk (100) verknüpft, einer Erstkonfigurationsmeldung (C0), die mindestens einen Parameter bezüglich der Zugangsvorrichtung (10) beinhaltet,
- einen Schritt (13) des Empfangens, von der Verwaltungsentität (51), einer Erstbenachrichtigungsmeldung (C1), die mindestens eine standardmäßige Netzwerkabschnittskennung (100), die in Abhängigkeit von dem mindestens einen Parameter der Zugangsvorrichtung bestimmt wird, und Gebührenabrechnungsparameter, die mit der mindestens einen standardmäßigen Netzwerkabschnittskennung assoziiert sind, beinhaltet.

3. Verfahren zur Gebührenabrechnung nach Anspruch 1, das ferner einen Schritt (E11, E90) des Auswählens, durch die Zugangsvorrichtung (10), einer Netzwerkabschnittskennung und der assoziierten Gebührenabrechnungsparameter anhand der mit der mindestens einen empfangenen Netzwerkabschnittskennung assoziierten Gebührenabrechnungsparameter beinhaltet, falls die Zugangsvorrichtung mehrere Netzwerkabschnittskennungen erhält.

4. Verfahren zur Gebührenabrechnung nach Anspruch 3, das ferner einen Schritt (E12) des Sendens, durch die Zugangsvorrichtung (10), einer Annahmemeldung (M5) beinhaltet, die die ausgewählte Netzwerkabschnittskennung beinhaltet.

5. Verfahren zur Gebührenabrechnung nach Anspruch 1, das ferner einen Schritt (E34) des Sendens, an die Entität (51) zur Verwaltung der Netzwerkabschnitte, einer Ablehnungsmeldung (M16) beinhaltet.

6. Verfahren zur Gebührenabrechnung nach Anspruch 5, das ferner einen Schritt (E37) des Empfangens einer Empfehlungsmeldung (M17) beinhaltet, die die Kennung eines anderen sogenannten standardmäßigen Netzwerkabschnitts beinhaltet.

7. Verfahren zur Gebührenabrechnung nach Anspruch 1, das ferner einen Schritt (E85) des Empfangens einer Meldung (M23) über eine Modifizierung der Gebührenabrechnungsparameter, die mit der mindestens einen empfangenen Netzwerkabschnittskennung assoziiert sind, beinhaltet.

8. Verfahren zur Gebührenabrechnung nach Anspruch 1, wobei der Schritt (E4, E24) des Detektierens durch das Empfangen von Daten bezüglich der Anwendung von einem Endgerät (13, 14), das mit der Zugangsvorrichtung (10) verknüpft ist, erfolgt.

9. Verfahren zur Gebührenabrechnung nach Anspruch 1, ferner beinhaltend:
- einen Schritt (E86) des Sendens, an ein mit der Zugangsvorrichtung (10) verknüpftes Endgerät (13, 14), einer Informationsmeldung (M24), die eine Angabe bezüglich der mindestens einen Netzwerkabschnittskennung und die Gebührenabrechnungsparameter, die mit der mindestens einen Kennung assoziiert sind, beinhaltet,
- einen Schritt (E88) des Empfangens, von dem Endgerät (13, 14), einer Empfehlungsmeldung (M25), die eine Information bezüglich der empfangenen Gebührenabrechnungsparameter beinhaltet.

10. Verfahren zur Gebührenabrechnung nach Anspruch 1, wobei die Verwaltungsentität (51) eine NSSF-Vorrichtung, Network-Slice-Selection-Function-Vorrichtung, ist.

11. Verfahren zur Gebührenabrechnung nach Anspruch 1, wobei die Gebührenabrechnungsparameter in S-NSSAI-Daten, Single-Network-Slice-Selection-Assistance-Information-Daten, enthalten sind.

12. Verfahren zur Gebührenabrechnung nach Anspruch 1, das ferner einen Schritt des Initialisierens der Gebührenabrechnung der Daten der Anwendung in Abhängigkeit von der empfangenen Benachrichtigungsmeldung beinhaltet.

13. Vorrichtung zur Gebührenabrechnung der Daten einer Anwendung, die auf einem Abschnitt eines Kommunikationsnetzwerks (100) übertragen werden, implementiert in einer Zugangsvorrichtung (10) zu dem Netzwerk (100) und beinhaltend:
- einen Detektor (61), der dazu fähig ist, eine Aktivierung oder einen Start der Anwendung zu detektieren,
- einen Sender (63), der dazu fähig ist, im Anschluss an den Schritt des Detektierens (E4, E24) eine Identifikationsmeldung, die eine Information bezüglich der Identifikation der detektierten Anwendung beinhaltet, an eine Entität (51) zur Verwaltung der Netzwerkabschnitte zu senden,
- einen Empfänger (64), der dazu fähig ist, eine Benachrichtigungsmeldung, die mindestens eine Netzwerkabschnittskennung, die der detektierten Anwendung entspricht, und Gebührenabrechnungsparameter, die mit der mindestens einen Netzwerkabschnittskennung assoziiert sind, beinhaltet, von der Entität (51) zur Verwaltung der Netzwerkabschnitte zu empfangen,
- ein Modul zur Initialisierung einer Gebührenabrechnung von Daten, das dazu fähig ist, die Gebührenabrechnung der Daten des Netzwerkabschnitts, dessen Kennung ausgewählt wurde, in Abhängigkeit von den Tarifbedingungen, die mit den Gebührenabrechnungsparametern des Abschnitts verbunden und mit dem Transport der Daten auf dem ausgewählten Netzwerkabschnitt assoziiert sind, zu initialisieren.

14. System zur Gebührenabrechnung, beinhaltend
- eine Zugangsvorrichtung (10), die eine Gebührenabrechnungsvorrichtung nach Anspruch 13 beinhaltet,
- eine Entität (51) zur Verwaltung der Netzwerkabschnitte, beinhaltend
- einen Empfänger, der dazu fähig ist, die Identifikationsmeldung, die eine Information bezüglich der Identifikation der Anwendung beinhaltet, zu empfangen,
- ein Auswahlmodul, das dazu fähig ist, mindestens eine Netzwerkabschnittskennung, die der Anwendung entspricht, und Gebührenabrechnungsparameter, die mit der mindestens einen Netzwerkabschnittskennung assoziiert sind, auszuwählen,
- einen Sender, der dazu fähig ist, die Benachrichtigungsmeldung, die die mindestens eine Netzwerkabschnittskennung und die mit der mindestens einen Netzwerkabschnittskennung assoziierten Gebührenabrechnungsparameter beinhaltet, zu senden.

15. Computerprogramm, **dadurch gekennzeichnet, dass** es Anweisungen zur Implementierung der Schritte des Verfahrens zur Gebührenabrechnung nach Anspruch 1 beinhaltet, wenn dieses Verfahren von einem Prozessor ausgeführt wird.

16. Speichermedium, das von einer Gebührenabrechnungsvorrichtung nach Anspruch 13 gelesen werden kann und auf dem das Programm nach Anspruch 15 gespeichert ist.

## Claims

1. Method for charging for the data of an application which are transmitted on a slice of a communication network (100), which is implemented in a device (10) for accessing the network (100) and comprises:
- a step (E4, E24) of detecting when the application is activated or started,
- after the detection step (E4, E24), a step (E5, E25) of transmitting, to an entity (51) for managing the network slices, an identification message (M2, M12) comprising information relating to the identification of the detected application,
- a step (E10, E32) of receiving, from the entity (51) for managing the network slices, a notification message (M4, M15, M17) comprising at least one network slice identifier corresponding to the detected application and charging parameters associated with the at least one network slice identifier,
- a step (E11, E90) of initializing the charging for the data of the network slice the identifier of which was selected according to the tariff conditions which are linked to the charging parameters of said slice and associated with transporting the data on the selected network slice.

2. Charging method according to Claim 1, further comprising, before the detection step (E4, E24), when the access device is connecting to the network:
- a step (10) of transmitting, to the entity (51) for managing the network slices, an initial configuration message (C0) comprising at least one parameter relating to the access device (10), when the access device is attaching to the network (100),
- a step (13) of receiving, from the management entity (51), an initial notification message (C1) comprising at least one default network slice identifier (100) determined according to the at least one parameter of the access device, and some charging parameters associated with the at least one default network slice identifier.

3. Charging method according to Claim 1, further comprising a step (E11, E90) of selecting, by the access device (10), a network slice identifier and associated charging parameters on the basis of the charging parameters associated with the at least one received network slice identifier in the event that the access device obtains several network slice identifiers.

4. Charging method according to Claim 3, further comprising a step (E12) of transmitting, by the access device (10), an acceptance message (M5) comprising the selected network slice identifier.

5. Charging method according to Claim 1, further comprising a step (E34) of transmitting, to the entity (51) for managing the network slices, a refusal message (M16) .

6. Charging method according to Claim 5, further comprising a step (E37) of receiving a recommendation message (M17) comprising the identifier of another network slice, referred to as the default network slice.

7. Charging method according to Claim 1, further comprising a step (E85) of receiving a message (M23) for modifying the charging parameters which are associated with the at least one received network slice identifier.

8. Charging method according to Claim 1, wherein the detection step (E4, E24) is performed by receiving data relating to the application from a terminal (13, 14) attached to the access device (10).

9. Charging method according to Claim 1, further comprising:
- a step (E86) of transmitting, to a terminal (13, 14) attached to the access device (10), an information message (M24) comprising a datum relating to the at least one network slice identifier and the charging parameters associated with the at least one identifier,
- a step (E88) of receiving, from the terminal (13, 14), a recommendation message (M25) comprising information relating to the received charging parameters.

10. Charging method according to Claim 1, wherein the management entity (51) is an NSSF, network slice selection function, device.

11. Charging method according to Claim 1, wherein the charging parameters are contained in S-NSSAI, single network slice selection assistance information, data.

12. Charging method according to Claim 1, further comprising a step of initializing the charging for data of the application, according to the received notification message.

13. Device for charging for the data of an application which are transmitted on a slice of a communication network (100), which is implemented in a device (10) for accessing the network (100) and comprises:
- a detector (61), which is able to detect when the application is activated or started,
- a transmitter (63), which is able to transmit, after the detection step (E4, E24), to an entity (51) for managing the network slices, an identification message comprising information relating to the identification of the detected application,
- a receiver (64), which is able to receive, from the entity (51) for managing the network slices, a notification message comprising at least one network slice identifier corresponding to the detected application and charging parameters associated with the at least one network slice identifier,
- a module for initializing the charging for the data, which is able to initialize the charging for the data of the network slice the identifier of which was selected according to the tariff conditions which are linked to the charging parameters of said slice and associated with transporting the data on the selected network slice.

14. Charging system comprising
- an access device (10) comprising a charging device according to Claim 13,
- an entity (51) for managing the network slices comprising
- a receiver, which is able to receive the identification message comprising information relating to the identification of the application,
- a selection module, which is able to select at least one network slice identifier corresponding to the application and charging parameters associated with the at least one network slice identifier,
- a transmitter, which is able to transmit the notification message comprising the at least one network slice identifier and the charging parameters associated with the at least one network slice identifier.

15. Computer program, **characterized in that** it comprises instructions for implementing the steps of the charging method according to Claim 1, when this method is executed by a processor.

16. Recording medium which can be read by a charging device according to Claim 13, on which the program according to Claim 15 is recorded.
